# EUROPÄISCHE PATENTANMELDUNG

(11) **EP 1 154 244 A1**
(43) Veröffentlichungstag der Anmeldung: **14.11.2001**
(21) Anmeldenummer: 00110024.7
(22) Anmeldetag: 12.05.2000
(51) Int. Cl.: G01F 23/00

(54) **Verfahren zur Messung des Füllstandes beziehungsweise der Dichte einer Flüssigkeit in einem Behälter und Vorrichtung hierfür**

(71) Anmelder: Kübler, Heinrich, Dr., 69439 Zwingenberg (DE)
(72) Erfinder: Kübler, Heinrich, Dr., 69439 Zwingenberg (DE)
(74) Vertreter: Clemens, Gerhard, Dr.-Ing.

(57) **Zusammenfassung**

Ein Verfahren zur Messung des Füllstandes (24) einer Flüssigkeit in einem Behälter (12) mit einer mit dem Behälter (12) in Fluid-Kommunikation nach dem Prinzip der kommunizierenden Röhre stehenden Bypass-Einrichtung (10.1) mit einer oberen Bypass-Leitung (14.1), einem Füllstandsrohr (16.1) und einer unteren Bypass-Leitung (18), zeichnet sich dadurch aus, dass das jeweils dem aktuellen Füllzustand (24) entsprechende Gewicht der in der Bypass-Einrichtung (10.1) vorhandenen Flüssigkeit direkt oder über Hilfsgrößen indirekt gemessen und in Signale umgesetzt wird und die Signale unter Einbeziehung der Gewichtsdaten im nicht befüllten Zustand der Bypass-Einrichtung (10.1) zur Berechnung der aktuellen Füllstandshöhe ausgewertet werden.

## Beschreibung

### TECHNISCHES GEBIET

Die vorliegende Erfindung betrifft ein Verfahren zur Messung des Füllstandes einer Flüssigkeit in einem Behälter mit einer mit dem Behälter in Fluid-Kommunikation nach dem Prinzip der kommunizierenden Röhre stehenden Bypass-Einrichtung mit einer oberen Bypass-Leitung, einem Füllstandsrohr und einer unteren Bypass-Leitung. Die vorliegende Erfindung betrifft ebenfalls eine Vorrichtung zur Durchführung des Verfahrens.

### STAND DER TECHNIK

Aus dem Katalog KSR KÜBLER Steuer- und Regeltechnik, KSR-Niveau-Meßwertgeber ...., Nr. 1001-3, 9/93, ist eine Füllstands-Messvorrichtung beschrieben, die seit Jahrzehnten zuverlässig eingesetzt wird. Derartige Füllstands-Messvorrichtungen arbeiten nach dem Schwimmerprinzip mit magnetischer Übertragung (Permanentmagnet, Reed-Schalter und Widerstandsmesskette). Nur ein bewegliches Bauteil - ein auf ein Gleitrohr aufgesetzter Schwimmer - gleitet zuverlässig mit der Flüssigkeit auf und ab. Ein in den Schwimmer eingelegter Ringmagnet betätigt mit seinem Magnetfeld durch die Wandung des Gleitrohrs hindurch sehr kleine Reedkontakte, die an einer Widerstands-Messkette eine Mess-Spanne unterbrechungslos abgreifen, die der Höhe des Füllstandes proportional ist.

Außen auf dem Bypass-Rohr, außerhalb der Flüssigkeit in trockener Umgebung, ist zusätzlich ein Magnet-Niveaustands-anzeiger befestigt. Durch das gebündelte Magnetfeld des Dauermagnets im Zylinderschwimmer werden durch die Wandung des Bypass-Rohres hindurch rot-weiße Magnetrollen nacheinander um 180° (Altgrad) gedreht, so dass die Füllstandshöhe in einem Behälter als rote Säule ständig optisch angezeigt wird.

### DARSTELLUNG DER ERFINDUNG

Ausgehend von dem genannten Stand der Technik liegt der vorliegenden Erfindung das technische Problem beziehungsweise die Aufgabe zugrunde, ein Verfahren zur Messung des Füllstandes einer Flüssigkeit in einem Behälter der eingangs genannten Art anzugeben, das eine äußerst präzise Messung gewährleistet und wirtschaftliche Vorteile mit sich bringt.

Der Erfindung liegt weiterhin die Aufgabe beziehungsweise das technische Problem zugrunde, eine Vorrichtung zum wirtschaftlichen Einsatz des Verfahrens zur Verfügung zu stellen.

Das erfindungsgemäße Verfahren ist durch die Merkmale des Anspruchs 1 oder 2 oder 7 gegeben. Vorteilhafte Ausgestaltungen und Weiterbildungen des erfinderischen Verfahrens sind Gegenstand der von diesen Ansprüchen abhängigen Ansprüche.

Eine Ausführungsvariante des erfindungsgemäßen Verfahrens zeichnet sich demgemäß dadurch aus, dass das jeweils dem aktuellen Füllzustand entsprechende Gewicht der in der Bypass-Einrichtung vorhandenen Flüssigkeit direkt oder über Hilfsgrößen indirekt gemessen und in Signale umgesetzt wird und die Signale unter Einbeziehung der Gewichtsdaten im nicht befüllten Zustand der Bypass-Einrichtung zur Berechnung der aktuellen Füllstandshöhe ausgewertet werden.

Eine zweite erfindungsgemäße Ausführungsvariante zeichnet sich dadurch aus, dass eine Bypass-Einrichtung eingesetzt wird, die bei Beaufschlagung mit Flüssigkeit planmäßig messbare elastische Verformungen aufweist, und die jeweilige, einem aktuellen Füllstandsniveau entsprechende Verformung der Bypass-Einrichtung detektiert und in Signale umgesetzt wird und die Signale unter Einbeziehung der Gewichtsdaten im nicht befüllten Zustand der Bypass-Einrichtung zur Berechnung der aktuellen Füllstandshöhe ausgewertet werden.

Bevorzugt wird als maßgebende Verformung die Vertikalverschiebung des Füllstandsrohres verwendet.

Zur Detektierung des Gewichts der Bypass-Einrichtung beziehungsweise des Füllstandsrohres wird in einer besonders vorteilhaften Ausgestaltung eine Präzisions-Wägezelle eingesetzt, die gemäß einer bevorzugten Ausgestaltung als Biegestab-Wägezelle ausgebildet ist. In einer alternativen Ausgestaltung kann zur Detektierung des Gewichts ein Drucksensor eingesetzt werden.

Eine dritte erfindungsgemäße Ausführungsvariante ist dadurch gekennzeichnet, dass innerhalb des Füllstandsrohres ein verschiebbarer, nicht schwimmfähiger Verdrängungskörper eingesetzt wird, der einen ersten Dauermagneten aufweist, ein zweiter Dauermagnet eingesetzt wird, derart, dass der Verdrängungskörper auf einem gegenpoligen Magnetfeld schwebt, und die Magnetkraft beziehungsweise die Änderung der Magnetkraft bei leeren, teilweise beziehungsweise voll gefülltem Füllstandsrohr gemessen und daraus die Füllstandshöhe beziehungsweise die Dichte der Flüssigkeit gemessen wird.

Eine besonders bevorzugte Ausgestaltung ist dadurch gekennzeichnet, dass das oben genannte Verfahren auch zur Messung der Dichte einer Flüssigkeit eingesetzt wird, indem bei vollständig gefüllter Bypass-Einrichtung mit einer aktuellen Flüssigkeit die Verschiebung der Bypass-Einrichtung oder das Gewicht der Flüssigkeit detektiert und ausgewertet wird und die aktuelle Dichte ermittelt wird im Bezug auf Referenzdaten, die sich dadurch ergeben, dass gespeicherte Werte vorliegen für einen Zustand, in dem die Bypass-Einrichtung mit einer definierten Referenz-Flüssigkeit mit Referenz-Dichte und Referenz-Volumen der Bypass-Einrichtung ermittelt und gespeichert worden sind.

Der vorliegenden Erfindung liegt weiterhin die Aufgabe beziehungsweise das technische Problem zugrunde, eine Vorrichtung zur Verfügung zu stellen, die einen wirtschaftlichen Einsatz des genannten Verfahrens gewährleistet.

Diese Aufgabe beziehungsweise das technische Problem wird durch die Merkmale der unabhängigen Ansprüche 9 und 10 gelöst. Vorteilhafte Ausgestaltungen und Weiterbildungen der erfinderischen Vorrichtung sind Gegenstand der von diesen Ansprüchen abhängigen Ansprüche.

Eine erste erfindungsgemäße Ausführungsform zeichnet sich dadurch aus, dass Mittel zur Messung des von der jeweiligen Füllstandshöhe abhängigen Gewichts oder elastischen Verformung der Bypass-Einrichtung vorhanden sind, und Mittel zum Auswerten der von den Mitteln zur Messung abgegebenen Signale zur Berechnung der Füllstandshöhe beziehungsweise der Dichte der Flüssigkeit vorhanden sind.

Eine zweite erfindungsgemäße Ausführungsvariante der Vorrichtung, die zur Lösung der gestellten Aufgabe beiträgt, zeichnet sich dadurch aus, dass Mittel zur Messung der vom jeweiligen Füllstand abhängigen Magnetkräfte vorhanden sind, die entsprechende Signale erzeugen, und Mittel zum Auswerten der von dem Mitteln zur Messung abgegebenen Signale zur Berechnung der Füllstandshöhe beziehungsweise der Dichte der Flüssigkeit vorhanden sind.

Eine besonders vorteilhafte Ausgestaltung zeichnet sich dadurch aus, dass die obere und untere Bypass-Leitung elastisch biegsam ausgebildet sind.

Eine alternative Weiterbildung ist dadurch gekennzeichnet, dass die untere Bypass-Leitung elastisch biegsam und das Füllstandsrohr elastisch längendehnbar ausgebildet sind.

Die obere beziehungsweise untere Bypass-Leitung kann als biegsamer Hochdruckschlauch, insbesondere Polytetrafluorethylen(PTFE) -Rohr oder Metallbalg ausgebildet sein.

Es hat sich als besonders vorteilhaft herausgestellt, insbesondere hinsichtlich einer hohen Präzisionsmessung und einer dauerhaften, zuverlässigen Funktion die Bypass-Einrichtung beziehungsweise das Füllstandsrohr an einer Präzisions-Wägezelle aufzuhängen.

Bei den dargestellten Verfahren beziehungsweise Vorrichtungen ist von besonderem Vorteil, dass in den Behältern keine Messgeräte, Sensoren oder Schwimmer erforderlich sind.

Gemäß einem Ausführungsbeispiel wird an einer Präzisions-Wägezelle ein Rohr oder Schlauch aufgehängt beziehungsweise auf diesem gelagert. Das Rohr ist mit biegsamen PTFE-Wellenschläuchen oben und unten mit einem Behälter verbunden und kann kleine Hubbewegungen senkrecht ausführen (Hubweg beispielsweise 1 bis 2 mm (Millimeter) oder kleiner) . Die Präzisions-Wägezelle kann das Gewicht des Rohres leer und gefüllt wiegen.

Wenn sich in dem mit einem Behälter kommunizierenden Rohr eine Flüssigkeit befindet, hat sie die gleiche Höhe wie im Behälter. Das Gewicht der Flüssigkeits-Säule im Rohr ist proportional der Füllstandshöhe im angeschlossenen Behälter.

Die Präzisions-Wägezelle ist bevorzugt an einen Dehnungsmess-Streifen(DMS) -Wiege-Indikator angeschlossen, in dem das Gewicht des leeren, hängenden oder stehenden Rohres gespeichert wird. Das zusätzliche Gewicht der Flüssigkeits-Säule im Rohr wird ständig ausgewertet - und damit die Füllstandshöhe im Behälter -, ohne dass sich in diesem ein Sensor oder Schwimmer in der Flüssigkeit befindet.

Mit dem dargestellten Verfahren beziehungsweise der dargestellten Vorrichtung kann auch die Dichte oder Konzentration einer Flüssigkeit sehr genau gemessen werden.

Weiterhin besteht mit den beschriebenen Vorrichtungen die besonders vorteilhafte Möglichkeit, die bewährten KSR-Bypass-Niveaustandsanzeiger - wie im Stand der Technik erwähnt - an eine Präzisions-Wägezelle zu hängen und mit biegsamen PTFE-Wellschläuchen mit einem Behälter zu verbinden. Die Füllstandshöhe kann dann mit einer Magnetrollen-Anzeige optisch und gleichzeitig über einen DMS-Messverstärker kontinuierlich angezeigt werden, und zwar mit einer bisher noch nicht umgesetzten Genauigkeit.

Die technischen Vorteile der neuen Füllstandsmessung lassen sich wie folgt kurz zusammenfassen:
- Es handelt sich um eine berührungslose Messung;
- es sind keine Sonden, Sensoren oder Schwimmer in einem Behälter oder in einer Flüssigkeit erforderlich.
- Durch den bevorzugten Einsatz einer Präzisions-Wägezelle mit einer Linearität besser als 0,005 % (Prozent) vom Endwert ist eine Messung außerhalb eines Behälters - nicht in der Flüssigkeit - möglich, wobei die Wägezelle beispielsweise lediglich einen Dehnungsmess-Streifen enthält, so dass der Einsatz einer empfindlichen Elektronik nicht erforderlich ist.
- Es werden keine beweglichen Teile eingesetzt, so dass eine Unempfindlichkeit gegenüber Dampf, Schaumbildung, Staub, Temperatur- und Druckänderungen in einem Behälter gegeben ist.
- Die Vorrichtung ist problemlos in einem explosionsgeschützten Bereich einsetzbar.
- Die Messeinrichtung selbst kann entfernt vom Behälter an Rohrleitungen angeschlossen werden.
- Es findet keine Wärmeübertragung auf die Detektierbeziehungsweise Auswerteinrichtung, insbesondere die Wägezelle statt.

Bei der nachfolgend kurz zusammengefasst dargestellten Mess-Methode befindet sich im Behälter oder in dem Bypassrohr kein Sensor oder Schwimmer, sondern nur die zu messende Flüssigkeit, deren Füllstandshöhe genau gemessen werden soll. Dies erfolgt dem Prinzip nach durch Wiegen der Flüssigkeits-Säule, die sich in einem Bypassrohr befindet. Das Gewicht kann dabei direkt oder indirekt über Verformungen ermittelt werden.

Das Bypassrohr ist mit einem Behälter durch zwei Hochdruckschläuche oder Metallbälge für laterale Verbindungen verbunden. Die laterale Bewegung ist mechanisch und messtechnisch problemlos, da der Messweg von beispielsweise Präzisions-Wägezellen unter 1 mm (Millimeter) liegt und die Linearität besser als 0,005 % (Prozent) ist. Diese Füllstands-Messmethode ist besonders für aggressive, giftige, heiße, unruhige und schäumende Flüssigkeiten geeignet.

Auch Flüssig-Gase mit Luftblasen geringer Dichte sowie stark verschmutzte, dickflüssige und zähe Flüssigkeiten lassen sich mit dieser Methode präzise messen; ebenso bei hohen Behältern mit kleinem Durchmesser, in denen eine Messung mit Radar oder Ultraschall wegen der kegelförmigen Abstrahlung und den dadurch entstehenden Oberwellen nicht möglich ist, kann das Verfahren auch in diesem Bereich problemlos eingesetzt werden.

Die Wägezelle wiegt das Gewicht des Bypassrohrs und der Flüssigkeits-Säule, die sich im Bypassrohr befindet. In den an die Wägezelle angeschlossenen Wäge-Indikator wird das Gewicht des leeren Bypassrohrs eingegeben. Der Wäge-Indikator zeigt dann nur noch das Gewicht der Flüssigkeits-Säule, die sich im Bypassrohr befindet, beispielsweise mit einer Genauigkeit von 16 Bit über den vollen Messbereich digital an.

Ist die Dichte der Flüssigkeit bekannt, kann der Wäge-Indikator beim Hersteller schon direkt kalibriert werden.

Im Folgenden wird die Arbeitsweise einer erfindungsgemäßen Ausführungsform bei der Dichtemessung beschrieben:

In einem Bypassrohr aus Edelstahl (Hastelloy, Titan oder Kunststoff) befindet sich die Flüssigkeit, deren Dichte überwacht werden soll. Das Bypassrohr ist dabei durch biegsame Hochdruckschläuche oder Metallbälge für laterale Bewegungen mit dem Behälter verbunden. In einem Bypassrohr aus Edelstahl befindet sich ein Verdrängungskörper, der beispielsweise bei der Dichte 1 bis 1,5 nicht schwimmfähig ist. Der Verdrängungskörper ist ein Edelstahl-Hohlkörper oder aus Kunststoff-Vollmaterial (druck- und lecksicher) mit einem starken Dauermagnet im unteren Bereich. Der Verdrängungskörper ist mit Führungsstiften oben und unten längsverschieblich gelagert. Unten befindet sich außerhalb des Füllstandsrohres mit geringem Abstand ein starker Dauermagnet, der auf einer Wägezelle befestigt ist. Der Verdrängungskörper schwebt auf dem gegenpoligen Magnetfeld zwischen den Dauermagneten (Südpol gegen Südpol oder Nordpol gegen Nordpol).

Wenn das Bypassrohr mit einer Flüssigkeit gefüllt wird, wird der Verdrängungskörper um das Gewicht der verdrängten Flüssigkeit infolge einwirkender Auftriebskräfte leichter. die Wägezelle unten außerhalb des Bypassrohrs wiegt das Gewicht des Verdrängungskörpers abhängig von der Dichte der Flüssigkeit. Ändert sich die Dichte der verdrängten Flüssigkeit, dann ändert sich auch das Gewicht der verdrängten Flüssigkeit und damit das Gewicht des schwebenden Verdrängungskörpers.

In einem konkreten Ausführungsbeispiel schwebt das mit der Flüssigkeit gefüllte Bypassrohr auf einer Präzisions-Wägezelle mit einem Messweg kleiner als 0,5 mm (Millimeter) und einer Linearität besser als 0,005 % (Prozent).

Wasser hat die Dichte 1 (1 kg/dm³ Kilogramm pro Kubikdezimeter)). Bei Veränderung der Dichte ändert sich das Gewicht der Flüssigkeitssäule. In einem hier beispielhaft angeführten Bypassrohr mit einem Innendurchmesser von 56 mm (Millimeter) und einer Höhe von 406 mm befindet sich 1 Liter Wasser, was einem Gewicht von 1 kg (Kilogramm) und einer Dichte von 1 entspricht.

Die Wägezelle ist an einen Wäge-Indikator angeschlossen, in dem das Gewicht des leeren Bypassrohres gespeichert ist. Der Wäge-Indikator wiegt dann nur noch die Gewichtsveränderung der Flüssigkeits-Säule und damit die Dichte der Flüssigkeit mit hoher Genauigkeit, mit beispielsweise ca. 0,01 % (Prozent) Linearität vom Endwert.

Besonders vorteilhaft ist, dass sich die Wägezelle außerhalb der Flüssigkeit in trockener Umgebung in eigensicheren Bereichen befinden kann. Mit dem dargestellten Verfahren beziehungsweise der dargestellten Vorrichtung kann beispielsweise die Dichte von Alkohol, Benzin, Benzol, Glycerin, Dieselöl, Flüssig-Gas, Kältemittel, Kerosin oder dergleichen gemessen werden.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemaß angewandt werden. Es zeigen:
- Fig. 1a, b: schematische Darstellung eines ersten Ausführungsbeispiels einer Bypass-Einrichtung mit biegsamer oberer und unterer Bypass-Leitung,
- Fig. 2a, b: schematische Darstellung eines zweiten Ausführungsbeispiels einer Bypass-Einrichtung mit biegsamer unterer Bypass-Leitung und längendehnbarem Füllstandsrohr,
- Fig. 3a, b: schematische Darstellung eines dritten Ausführungsbeispiels mit einem auf einem Magnetfeld innerhalb des Füllstandsrohrs schwebend gelagerten Verdrängungskörper,
- Fig. 4: schematische Ansicht einer ersten konstruktiven Ausführungsform einer Bypass-Einrichtung mit biegsamer oberer und unterer Bypass-Leitung und an einer Wägezelle aufgehängtem Füllstandsrohr,
- Fig. 5 und 6: schematische Darstellung eines zweiten konstruktiven Ausführungsbeispiels mit einer biegsamen unteren Bypass-Leitung und einem längendehnbaren Füllstandsrohr, einwirkend auf eine Wägezelle,
- Fig. 7a, b: schematische Darstellung einer Bypass-Einrichtung, bei der die Vertikalverschiebung des Füllstandsrohres unter Gewichtsbelastung zur Füllstandshöhenmessung verwendet wird, und
- Fig. 8: schematische Ansicht einer weiteren konstruktiven Ausführungsform einer Bypass-Einrichtung mit biegsamer oberer und unterer Bypass-Leitung und auf einer Wägezelle gelagertem Füllstandsrohr

### WEGE ZUM AUSFÜHREN DER ERFINDUNG

Fig 7a und b zeigt stark schematisiert das Prinzip der Messung der Füllstandshöhe in einem Behälter 12. Eine Bypass-Einrichtung 10, bestehend aus einer oberen Bypass-Leitung 14.1, ein an diese Leitung 14.1 angeschlossenes Füllstandsrohr 18 und eine an das Füllstandsrohr 18 angeschlossene untere Bypass-Leitung 16.1. Die Bypass-Einrichtung 10 steht mit dem Behälter 12 nach dem Prinzip der kommunizierenden Röhre in Verbindung, das heißt eine im Behälter 12 sich einstellende Füllstandshöhe 24 stellt sich auch innerhalb der Bypass-Einrichtung 10 ein.

Fig. 7a zeigt die Bypass-Einrichtung 10 in nicht gefülltem Zustand. Fig. 7b zeigt die Bypass-Einrichtung 10 in teilweise gefülltem Zustand bei einer Füllstandshöhe 24. Die obere Bypass-Leitung 14.1 und die untere Bypass-Leitung 16.1 sind elastisch biegsam ausgebildet, so dass sich unter Befüllung die gesamte Bypass-Einrichtung 10 und insbesondere das Füllstandsrohr 18 vertikal um das Maß V verschiebt. Konstruktiv liegt diese Verschiebung beispielsweise im Bereich zwischen 0 und 3 mm (Millimeter), insbesondere bei ca. 1 mm. Diese Verschiebung V infolge des Gewichts der eingefüllten Flüssigkeit wird durch eine Detektiereinheit 20 erfasst, in Signale umgewandelt und einer Auswerteinheit 22 zugeführt, die daraus die jeweilige Füllstandshöhe 24 berechnet.

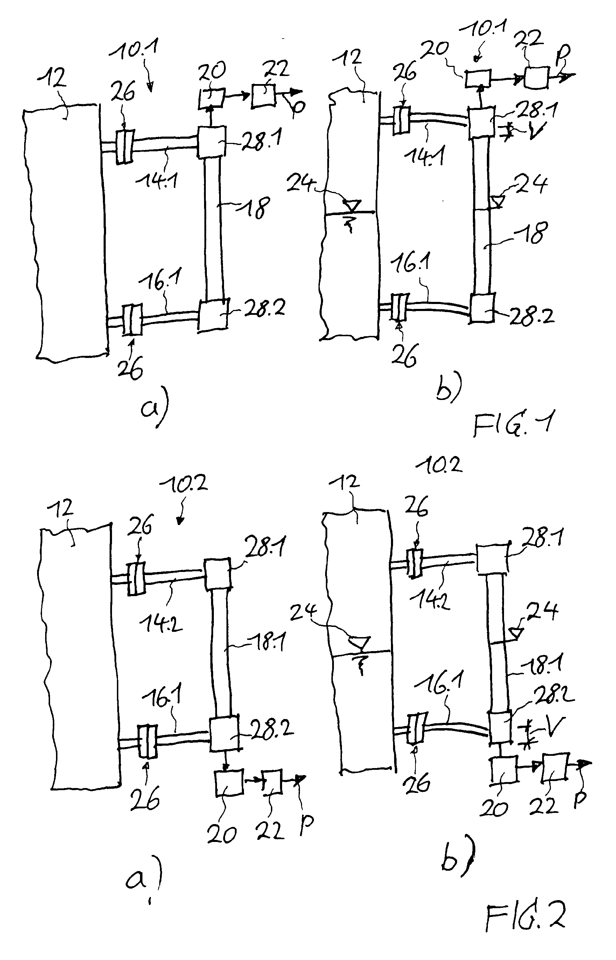

Eine erste nach diesem Prinzip arbeitende Ausführungsvariante ist in den Figuren 1a und 1b dargestellt. Dort ist eine Bypass-Einrichtung 10.1 beschrieben, bei der elastisch biegsame obere und untere Bypass-Leitungen 14.1, 16.1 über Verbindungseinheiten 26 kommunizierend an einen Behälter 12 angeschlossen sind. Der Anschluss an das Füllstandsrohr 18 erfolgt über Verbindungseinheiten 28.1 beziehungsweise 28.2.

Die Bypass-Einrichtung 10.1 beziehungsweise das Füllstandsrohr 18 ist oberseitig an eine Wägezelle als Detektiereinheit 20 angeschlossen. Die Wägezelle gibt ihre Signale an eine Auswerteinheit 22 ab, die die Signale auswertet, anzeigt und/oder einem weiteren Prozessverlauf (Pfeil P) zuführt. Bei Befüllung des Füllstandsrohrs 18 wird das in dem Füllstandsrohr 18 beziehungsweise das in der Bypass-Einrichtung 10.1 befindliche Gewicht direkt von der Wägezelle 20 gemessen, woraus sehr exakt die jeweils zugehörige Füllstandshöhe gemessen werden kann, da die Geometrie des Füllstandsrohrs und die Dichte der Flüssigkeit bekannt sind.

Ein zweites Ausführungsbeispiel ist in Fig. 2 schematisch dargestellt. Dabei wird eine untere biegsame Bypass-Leitung 16.1 eingesetzt. Gleichzeitig ist das Füllstandsrohr 18.1 ebenfalls aus einem biegsamen Material und aus einem Material, das eine gewisse elastische Längenausdehnung im Füllzustand aufweist. Die Längenausdehnung kann hier im Bereich weniger Millimeter liegen.

Durch Befüllung dehnt sich das Füllstandsrohr 18.1 in Längsrichtung aus und es kommt zu einer Gesamtverschiebung V. Die Verschiebung beziehungsweise das Füllgewicht wirkt auf eine unterhalb des Füllstandsrohres 18.1 vorhandene Wägezelle 20 ein, deren Signale durch die Auswerteinrichtung 22 zur Berechnung der Füllstandshöhe 24 verwendet werden.

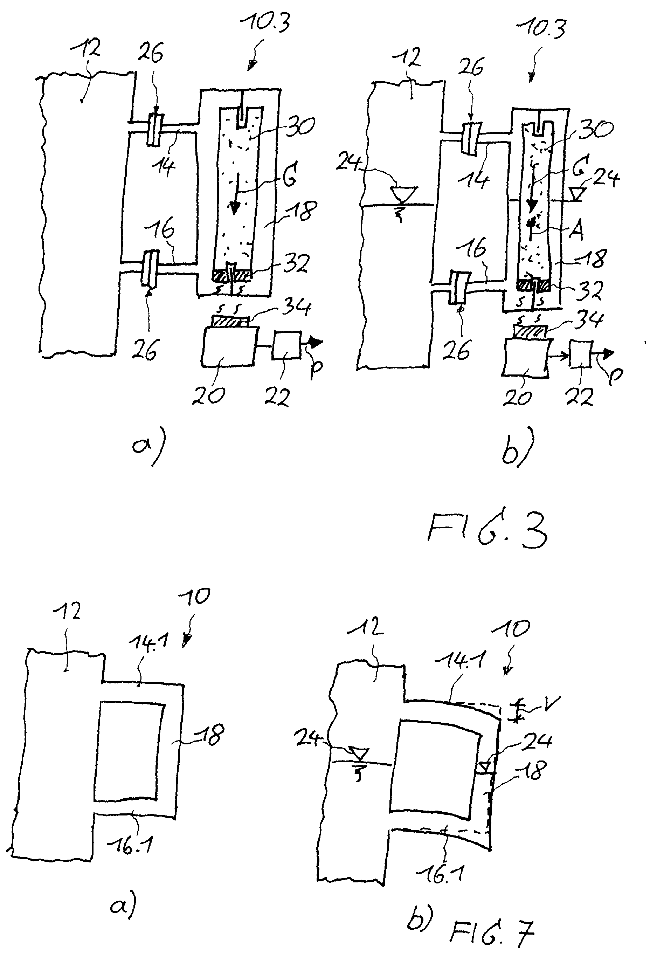

Ein drittes Ausführungsbeispiel ist in den Figuren 3a beziehungsweise 3b dargestellt. Hierbei handelt es sich beispielsweise um eine Vorrichtung 10.3 zur Bestimmung der Dichte von Flüssigkeiten. In dem Füllstandsrohr 18 befindet sich ein Verdrängungskörper 30, der längsverschieblich gelagert ist. Am unteren Ende des Verdrängungskörpers 30 ist ein Permanentmagnet 32 angeordnet. Außerhalb des Füllstandsrohres 18 ist unterseitig in unmittelbarer Nähe ein zweiter Permanentmagnet 34 vorhanden, der auf einer Wägezelle 20 gelagert ist, die ihre Signale wiederum an eine Auswerteinheit 22 weitergibt. Die Magnetfelder des ersten und zweiten Permanentmagneten 32 beziehungsweise 34 sind gegenpolig ausgebildet, so dass der Verdrängungskörper 30 quasi schwebt.

Der Verdrängungskörper 30 ist als nicht schwimmfähiger Körper ausgebildet.

Im Leerzustand des Füllstandsrohrs 18 wird die Wägezelle 20 kalibriert. Die Gewichtskraft G steht mit der magnetischen Abstoßungskraft im Gleichgewicht. Ist nun das Füllstandsrohr 18 vollständig mit Flüssigkeit gefüllt, vermindert sich die zum Schweben erforderliche Magnetkraft um die Auftriebskraft A. Diese Verminderung wird von der Wägezelle 20 gemessen und signalmäßig der Auswerteinrichtung 22 übermittelt. Die Auswerteinrichtung 22 errechnet nun die Dichte der jeweils aktuell eingefüllten Flüssigkeit aufgrund vorher gespeicherter Referenzdaten unter Zugrundelegung einer definierten Flüssigkeit mit definierter Dichte und einem definierten Volumen des Füllstandsrohres 18.

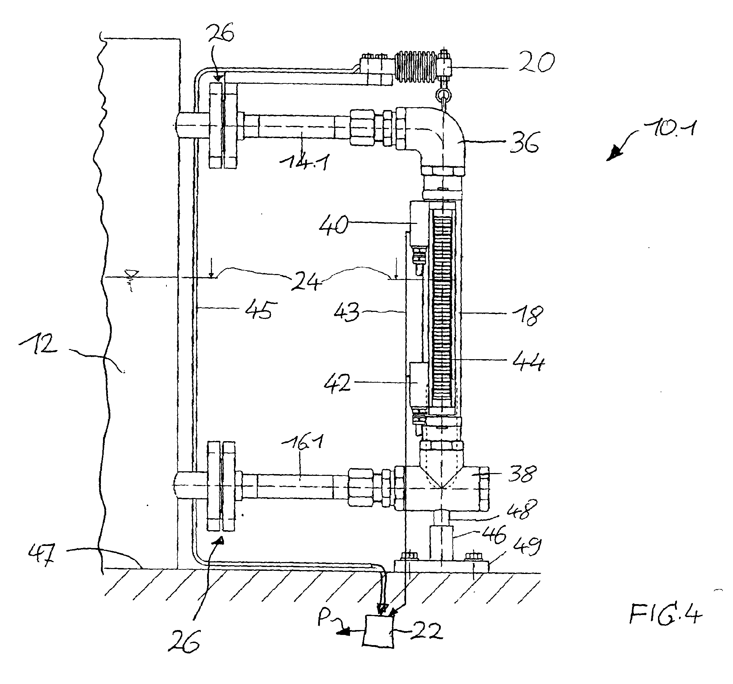

Fig. 4 zeigt ein konstruktives Ausführungsbeispiel einer Vorrichtung 10.1 zum Messen des Füllstandes eines Behälters 12. Die obere und untere Bypass-Leitung 14.1 beziehungsweise 16.1 sind als Polytetrafluorethylen(PTFE)-Wellenschlauch mit einer elastischen Biegbarkeit ausgebildet. Das Füllstandsrohr 18 ist als Edelstahlrohr ausgebildet. Der Anschluss der oberen Bypass-Leitung 14.1 an das Edelstahlrohr 18 erfolgt über eine L-förmige Verbinder-einheit 36. Die untere Bypass-Leitung 16.1 ist über eine T-förmige Verbindereinheit 38 an das Füllstandsrohr 18 angeschlossen. Unterseitig ist an dem T-Verbinder 38 eine Vorsprungeinheit 48 angeformt, die in einem Führungsrohr 46 mit geringfügig größerem Durchmesser als dem Durchmesser der Vorsprungeinheit 48 geführt ist, welches Führungsrohr 46 wiederum über einen Flansch 49 mit einem Boden 47 verbunden ist. Das Füllstandsniveau im Behälter 12 und im Füllstandsrohr 18 ist mit dem Bezugszeichen 24 versehen.

An dem Edelstahlrohr 18 ist außenseitig parallel zu seiner Längsrichtung eine Magnetrollenanzeige 44 als Bestandteil einer optischen Bypass-Niveaustandsanzeige mit nicht näher dargestelltem Zylinderschwimmer angeordnet. Durch die Magnetkraft des Zylinderschwimmers werden die jeweils entsprechenden Magnetrollen gedreht, so dass eine zuverlässige optische Anzeige des Füllstandes gewährleistet ist.

Im oberen Endbereich des Füllstandsrohres 18 ist ein Voll-Alarmgeber 40 und im unteren Bereich des Füllstandsrohres 18 ist ein Leer-Alarmgeber 42 angeordnet, die über eine schematisch dargestellte Leitung 43 mit einer Auswerteinheit 22 verbunden sind.

Das Füllstandsrohr beziehungsweise die Bypass-Einrichtung 10.1 ist oberseitig an eine Wägezelle 20 angelenkt, die als Biege-DMS (Dehnungsmess-Streifen) -Wägezelle ausgebildet ist und wiederum ihre Signale über eine Leitung 45 an die Auswerteinheit 22 abgibt. Dabei werden aufgrund der Durchbiegung von Kragelementen die Dehn-Mess-Streifen gedehnt, wodurch ein elektrisches Signal entsteht, das mit der jeweiligen Durchbiegung korreliert. Die Dehn-Mess-Technik als solche ist bekannt.

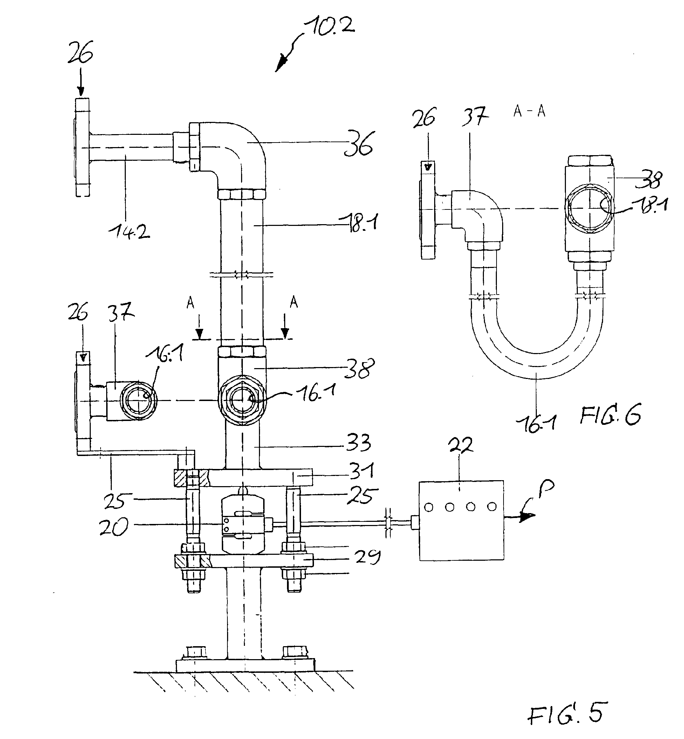

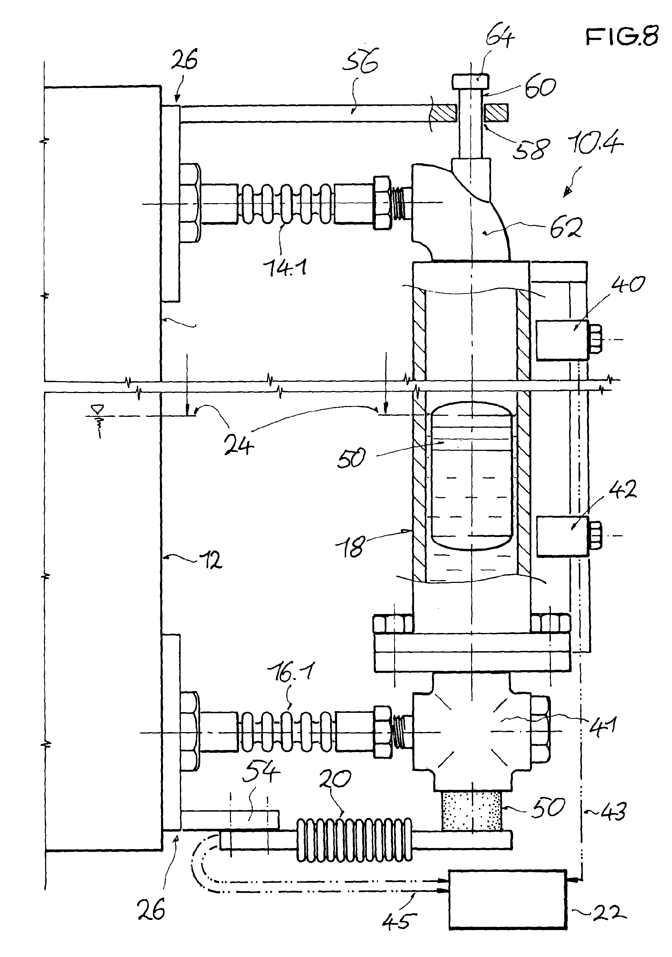

Das in Fig. 5 und 6 dargestellte konstruktive Ausführungsbeispiel einer Vorrichtung 10.2 zum Messen des Füllstandes weist eine obere, mehr oder minder starre Bypass-Leitung 14.2 auf, die über eine L-Verbindereinheit 36 an ein Füllstandsrohr 18.1 angeschlossen ist, das eine gewisse elastische Längenausdehnung bei Befüllung im Bereich von mindestens 1 mm (Millimeter) aufweist. Die untere Bypass-Leitung 16.1 ist elastisch biegsam ausgebildet und über einen L-Verbinder 37 an den Flanschanschluss 26 zum Behälter hin und über eine T-Verbindereinheit 38 an das Füllstandsrohr 18.1 angeschlossen. Unterseitig ist an die T-Verbindereinheit 38 über eine Vorsprungeinheit 33 ein Flansch 31 angeschlossen, der sich bei Befüllung der Bypass-Einrichtung 10.2 infolge der elastischen Nachgiebigkeit der unteren Bypass-Leitung 16.1 und des Füllstandsrohres 18.1 vertikal nach unten verschiebt. Diese Vertikalverschiebung wird auf eine unterhalb des Flansches 31 befindliche Wägezelle 20 übertragen beziehungsweise die aufgrund der Befüllung innerhalb der Bypass-Einrichtung 10.2 sich befindende Flüssigkeit drückt gewichtsmäßig auf die Wägezelle 20, die das Gewicht auswertet beziehungsweise Signale betreffend den aktuellen Gewichtszustand an die Auswerteinrichtung 22 zur Berechnung der Füllstandshöhe weitergibt. Die Wägezelle 20 ist auf einem weiteren Flansch 29 ortsfest gelagert, wobei der Flansch 31 über Führungsbolzen 25 im Millimeterbereich längsverschieblich an dem Flansch 29 gelagert ist, so dass sich jede Gewichtsveränderung innerhalb der Bypass-Einrichtung 10.2 direkt auf die Wägezelle 20 überträgt.

In Fig. 8 ist ein weiteres Ausführungsbeispiel einer Bypass-Einrichtung 10.4 schematisch dargestellt. Die Bypass-Einrichtung 10.4 hat einen ähnlichen Aufbau wie die Bypass-Einrichtung 10.1 gemäß Fig. 4. Gleiche Bauteile tragen das selbe Bezugszeichen und werden nicht nochmals erläutert. Auch hier ist das Füllstandsrohr 18 über flexible Wellenschläuche 14.1 beziehungsweise 16.1 mit dem Behälter 12 verbunden. Innerhalb des Füllstandsrohrs 18 schwimmt ein Zylinderschwimmer 50. Im oberen Bereich des Füllstandsrohres 18 ist außerhalb ein Magnetschalter 40 für den Voll-Zustand und unterhalb ein Magnetschalter 42 für den Leer-Zustand vorhanden, der über eine Leitung 43 an die Auswerteinheit 22 angeschlossen ist.

Im Gegensatz zur Ausführungsform gemäß Fig. 4 ist es bei der Bypass-Einrichtung 10.4 so, dass das Füllstandsrohr 18 auf einer Detektiereinheit 20, die als Wägemesszelle unter Einsatz der DMS-Messmethode ausgebildet ist, gelagert ist. Unterhalb des Füllstandsrohrs 18 ist über eine Verbindungseinheit 41 der untere Wellenschlauch 16.1 an das Füllstandsrohr 18 angeschlossen. Die Verbindungseinheit 41 ist auf einem Gummipuffer 52 gelagert, der wiederum auf der Biegestab-Wägezelle 20 angeordnet ist. Die Wägezelle 20 kann ein bekanntes Universal-DMS-Verstärker-Modul aufweisen. Vom statischen System her ist die Wägezelle als Kragträger ausgebildet. Über einen weiteren Kragträger 54 ist die Wägezelle 20 an den Flansch 26 angeschlossen. Je nach Füllzustand des Füllstandsrohrs 18 erfährt die Wägezelle 20 eine Kragdurchbiegung, die über Dehn-Mess-Streifen ausgewertet wird, deren elektrische Signale über Leitungen 45 der Auswerteinheit 22 zugeführt werden.

Im oberen Bereich, oberhalb der oberen Bypassleitung 14.1 ist ein Kragrohr 56 an den Flanschanschluss 26 angeschlossen. Im freien Endbereich des Kragrohrs 56 befindet sich eine durchgehende Ausnehmung 58, innerhalb derer ein Bolzen 60 geführt ist, der an der Verbindungseinheit 62 zwischen oberer Bypass-Leitung 14.1 und dem Füllstandsrohr 18 angeschlossen ist. Oberseitig ist auf dem Bolzen 60 eine Hutmutter 64 angeordnet. Durch diese konstruktive Ausgestaltung ist das Tragrohr eindeutig vertikal geführt, so dass es zu keiner Verkantung kommen kann.

Die technischen Vorteile, die die erfindungsgemäße Bypass-Vorrichtung bietet, stellen sich wie folgt dar:
- im Behälter befinden sich keine Antennen, Sensoren, Sonden, Schwimmer oder Verdrängungskörper
- auch im Füllstandsrohr befindet sich nur die Flüssigkeitssäule mit der gleichen Flüssigkeit wie im Behälter
- das Füllstandsrohr kann in beliebiger Länge hergestellt werden - aus dem gleichen Material wie der Behälter
- für dünnflüssige Medien mit kleinem Durchmesser und für dickflüssige, zähe Medien mit großem Durchmesser geeignet
- geeignet für sehr heiße, schäumende, unruhige und verschmutzte Flüssigkeiten
- die Präzisions-Wägezelle befindet sich unten unter dem Füllstandsrohr und nicht hoch oben auf dem Behälter - an und auf dem Behälter sind somit keine Leitungen erforderlich
- die Präzisions-Wägezelle ist geeignet für eine Umgebungstemperatur von -30°C bis +80°C; sie kann auch isoliert werden
- die biegsamen PTFE-Bypass-Leitungen (Hochdruckschläuche) sind geeignet für einen Arbeitsdruck bis 60 bar (Berstdruck 300 bar) und einen Temperaturbereich von -50°C bis +200°C und verwendbar beispielsweise in der chemischen Industrie, in Raffinerien sowie im Nahrungsmittelbereich
- das Füllstandsrohr kann entfernt vom Behälter an lange Rohrleitungen angeschlossen werden
- der DMS-Messverstärker kann entfernt von der Präzisions-Wägezelle und dem Behälter in geschützten Räumen eingebaut werden
- als Füllstandsrohre können bekannte Niveaustandsanzeiger zur optischen Anzeige der Füllstandshöhe mit Magnetrollenanzeige verwendet werden
- mit einem kurzen Füllstandsrohr, das ständig gefüllt ist, kann die Dichte oder Konzentration einer Flüssigkeit sehr genau gemessen werden
- das Füllstandsrohr kann auch aus Glas bestehen, um die Flüssigkeit sehen zu können.

## Patentansprüche

1. Verfahren zur Messung des Füllstandes (24) einer Flüssigkeit in einem Behälter (12) mit
- einer mit dem Behälter (12) in Fluid-Kommunikation nach dem Prinzip der kommunizierenden Röhre stehenden Bypass-Einrichtung (10, 10.1, 10.2) mit
-- einer oberen Bypass-Leitung (14),
-- einem Füllstandsrohr (16) und
-- einer unteren Bypass-Leitung (18),
**dadurch gekennzeichnet, dass**
- das jeweils dem aktuellen Füllzustand (24) entsprechende Gewicht der in der Bypass-Einrichtung (10, 10.1, 10.2) vorhandenen Flüssigkeit direkt oder über Hilfsgrößen indirekt gemessen und in Signale umgesetzt wird und
- die Signale unter Einbeziehung der Gewichtsdaten im nicht befüllten Zustand der Bypass-Einrichtung (10, 10.1, 10.2) zur Berechnung der aktuellen Füllstandshöhe ausgewertet werden.

2. Verfahren nach dem Oberbegriff von Anspruch 1,
**dadurch gekennzeichnet, dass**
- eine Bypass-Einrichtung (10) eingesetzt wird, die bei Beaufschlagung mit Flüssigkeit planmäßig messbare elastische Verformungen (V) aufweist, und
- die jeweilige, einem aktuellen Füllstandsniveau entsprechende Verformung (V) der Bypass-Einrichtung (10) detektiert und in Signale umgesetzt wird und
- die Signale unter Einbeziehung der Verschiebedaten im nicht befüllten Zustand der Bypass-Einrichtung (10) zur Berechnung der aktuellen Füllstandshöhe (24) ausgewertet werden.

3. Verfahren nach Anspruch 1 und/oder 2,
**dadurch gekennzeichnet, dass**
- als maßgebende Verformung die Vertikalverschiebung (V) des Füllstandsrohres (18) verwendet wird.

4. Verfahren nach einem oder mehreren der vorstehenden Ansprüche,
**dadurch gekennzeichnet, dass**
- zur Detektierung des Gewichts eine Wägezelle (20), insbesonder Biegestab-Wägezelle, eingesetzt wird.

5. Verfahren nach Anspruch 1 bis 3,
**dadurch gekennzeichnet, dass**
- zur Detektierung des Gewichts ein Drucksensor eingesetzt wird.

6. Verfahren nach einem oder mehreren der vorstehenden Ansprüche,
**dadurch gekennzeichnet, dass**
- das oben genannte Verfahren auch zur Messung der Dichte einer Flüssigkeit eingesetzt wird, indem
- bei vollständig gefüllter Bypass-Einrichtung mit einer aktuellen Flüssigkeit die Verschiebung der Bypass-Einrichtung oder das Gewicht der Flüssigkeit detektiert und ausgewertet wird und
- die aktuelle Dichte ermittelt wird im Bezug auf Referenzdaten, die sich dadurch ergeben, dass gespeicherte Werte vorliegen für einen Zustand, in dem die Bypass-Einrichtung mit einer definierten Referenz-Flüssigkeit mit Referenz-Dichte und Referenz-Volumen der Bypass-Einrichtung ermittelt und gespeichert worden sind.

7. Verfahren zur Messung des Füllstandes (24) beziehungsweise der Dichte einer Flüssigkeit in einem Behälter (12) nach dem Oberbegriff von Anspruch 1,
**dadurch gekennzeichnet, dass**
- innerhalb des Füllstandsrohres (16) ein verschiebbarer, nicht schwimmfähiger Verdrängungskörper (30) eingesetzt wird, der einen ersten Dauermagneten (32) aufweist,
- ein zweiter Dauermagnet (34) eingesetzt wird, derart, dass der Verdrängungskörper (30) auf einem gegenpoligen Magnetfeld schwebt, und
- die Magnetkraft beziehungsweise die Änderung der Magnetkraft bei leeren, teilweise beziehungsweise voll gefülltem Füllstandsrohr (18) gemessen und daraus die Füllstandshöhe beziehungsweise die Dichte der Flüssigkeit gemessen wird.

8. Verfahren nach Anspruch 7,
**dadurch gekennzeichnet, dass**
- der zweite Dauermagnet (34) auf einer Wägezelle (20) außerhalb der Bypass-Einrichtung (10.3) angeordnet ist.

9. Vorrichtung (10, 10.1, 10.2) zur Durchführung des Verfahrens nach einem oder mehreren der Ansprüche 1 bis 6,
**dadurch gekennzeichnet, dass**
- Mittel (20) zur Messung des von der jeweiligen Füllstandshöhe abhängigen Gewichts oder elastischen Verformung der Bypass-Einrichtung (10, 10.1, 10.2) vorhanden sind, und
- Mittel (22) zum Auswerten der von den Mitteln (20) zur Messung abgegebenen Signale zur Berechnung der Füllstandshöhe (24) beziehungsweise der Dichte der Flüssigkeit vorhanden sind.

10. Vorrichtung (10.3) zur Durchführung des Verfahrens nach Anspruch 7 und/oder 8,
**dadurch gekennzeichnet, dass**
- Mittel (20) zur Messung der vom jeweiligen Füllstand abhängigen Magnetkräfte vorhanden sind, die entsprechende Signale erzeugen, und
- Mittel (22) zum Auswerten der von dem Mitteln (20) zur Messung abgegebenen Signale zur Berechnung der Füllstandshöhe beziehungsweise der Dichte der Flüssigkeit vorhanden sind.

11. Vorrichtung nach Anspruch 9,
**dadurch gekennzeichnet, dass**
- die obere und untere Bypassleitung (14.1, 16.1) elastisch biegsam ausgebildet sind.

12. Vorrichtung nach Anspruch 9,
**dadurch gekennzeichnet, dass**
- die untere Bypassleitung (16.1) elastisch biegsam und das Füllstandsrohr (18.1) elastisch längendehnbar ausgebildet sind.

13. Vorrichtung nach Anspruch 11 oder 12,
**dadurch gekennzeichnet, dass**
- die obere beziehungsweise untere Bypassleitung (14.1, 16.1) als biegsamer Hochdruckschlauch, insbesondere Polytetrafluorethylen(PTFE)-Rohr oder Metallbalg ausgebildet ist.

14. Vorrichtung nach einem oder mehreren der Ansprüche 9 bis 13,
**dadurch gekennzeichnet, dass**
- das Füllstandsrohr (18.1) als biegsamer Schlauch ausgebildet ist.

15. Vorrichtung nach einem oder mehreren der Ansprüche 9 bis 14,
**dadurch gekennzeichnet, dass**
- die Bypass-Einrichtung (10.1) beziehungsweise das Füllstandsrohr (18) an/auf einer Präzisions-Wägezelle (20) oberseitig angehängt beziehungsweise unterseitig gelagert ist.

16. Vorrichtung nach einem der Ansprüche 9, 11 bis 13, 15,
**dadurch gekennzeichnet, dass**
- innerhalb des Füllstandsrohres (18) ein Schwimmkörper mit einem Dauermagneten angeordnet ist, der auf Magnetrollen einer längs des Füllstandsrohres (18) angeordneten Magnetrollenanzeige (44) einwirkt und so eine optische Füllstandsanzeige bewirkt.
